Europäisches Patentamt

European Patent Office

Office européen des brevets

(19)

(11) Veröffentlichungsnummer: **0 436 097 A1**

## (12) EUROPÄISCHE PATENTANMELDUNG

(21) Anmeldenummer: 90121929.5

(22) Anmeldetag: 16.11.90

(51) Int. Cl.5: **B65G 47/88, B23Q 7/14**

(30) Priorität: 30.12.89 DE 3943393

(43) Veröffentlichungstag der Anmeldung:
**10.07.91 Patentblatt 91/28**

(84) Benannte Vertragsstaaten:
**CH DE ES FR GB IT LI SE**

(71) Anmelder: **ROBERT BOSCH GmbH
Postfach 10 60 50
W-7000 Stuttgart 10(DE)**

(72) Erfinder: **Roesch, Arne, Dipl.-Ing.
Schulstrasse 1
W-8961 Haldenwang(DE)**
Erfinder: **Maurer, Werner, Dipl.-Ing.
Jahnstrasse 12/1
W-8970 Immenstadt(DE)**
Erfinder: **Fickert, Hartmut, Dipl.-Ing. (FH)
Otto-Keck-Strasse 18
W-8970 Immenstadt(DE)**

(54) Vorrichtung zum gedämpften Anhalten und Umlenken von auf einer Förderbahn bewegten Objekten.

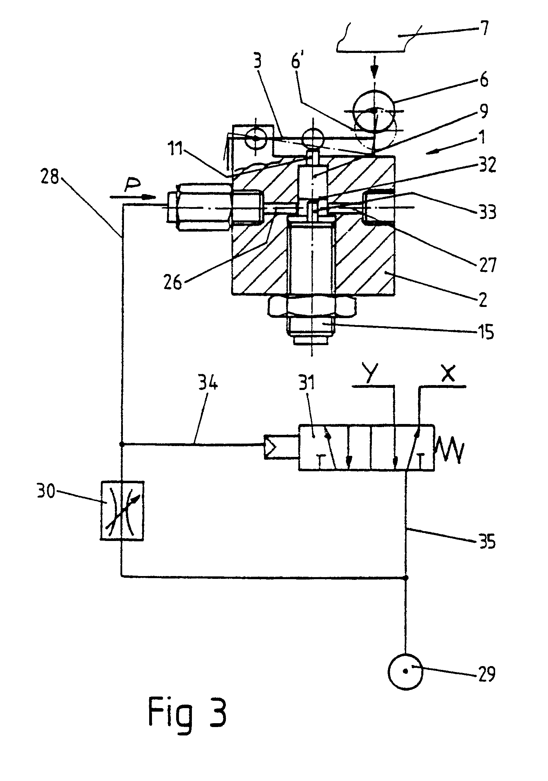

(57) Es wird eine Dämpfungsvorrichtung vorgeschlagen, die zum gedämpften Anhalten und Umlenken von auf einer Förderbahn bewegten Objekten, wie Werkstücke oder Werkstückträger dient. Um einen gedämpften Anschlag zu erzielen, ist ein als Umlenkrolle ausgebildetes Sperrglied (6) an einem Schwenkhebel (3) angelenkt, der über einen Schieber (9) mit einer Dämpfungseinrichtung (15) in Verbindung steht. Die Lage des Sperrglieds (6) wird über eine pneumatische Steuereinrichtung (26, 27, 32) abgefragt. (Fig. 3).

Fig 3

EP 0 436 097 A1

## "VORRICHTUNG ZUM GEDÄMPFTEN ANHALTEN UND UMLENKEN VON AUF EINER FÖRDERBAHN BEWEGTEN OBJEKTEN"

Stand der Technik

Die Erfindung geht aus von einer Vorrichtung zum gedämpften Anhalten und Umlenken von auf einer Förderbahn bewegten Objekten nach dem Oberbegriff des Anspruchs 1.

Derartige Vorrichtungen werden bei automatisch gesteuerten Bewegungsvorgängen, insbesondere bei automatischen Bearbeitungs- oder Fördervorrichtungen verwendet, bei welchen ein bewegliches Teil, z. B. ein, ein Werkstück tragender Werkstückträger gegen einen Anschlag bewegt wird, wo das Werkstück bearbeitet, oder sonstwie behandelt wird.

Aus der DE 36 29 914 Cl ist ein Anschlag mit einer Dämpfungseinrichtung bekannt geworden, der einen schwenkbaren Sperrhebel aufweist, dessen Drehachse über einen Reibbelag gedämpft wird. Um den Reibungswiderstand am Reibbelag einzustellen, ist eine zum Reibbelag hin gerichtete axiale Verstellbewegung der Lagerachse vorgesehen, die durch ein Fluid bewirkt wird. Das Fluid wirkt dabei auf eine, auf der Lagerwelle befestigte kolbenartige Scheibe, um - neben der Erzeugung der Reibbelag-Anpreßkraft - eine axiale Verschiebbarkeit der Lagerwelle und damit des Anschlags zu bewirken und hierdurch den Sperrhebel außer Eingriff mit dem Werkstückträger zu bringen.

Vorteile der Erfindung

Die erfindungsgemäße Anordnung mit den kennzeichnenden Merkmalen des Hauptanspruchs hat demgegenüber den Vorteil, daß eine kompakte Baueinheit zum gedämpften Anhalten und Um- bzw. Ablenken eines auftreffenden Gegenstandes, z. B. eines Werkstückträgers geschaffen wird, bei welcher eine Abstimmung der Stell-, Reib- und Rückführkräfte selbständig, ohne äußere Beeinflußung erfolgt. Insbesondere wird eine automatische Dämpfung des Sperrglieds bei der Abbremsbewegung des Gegenstands und eine automatische Rückführung des Sperrgliedes in die Anschlagbzw. Fangstellung bewirkt.

Die Erfindung eignet sich insbesondere zur gedämpften Abbremsung eines auf die Vorrichtung auftreffenden Werkstückträgers der dann auf eine, zur ankommenden Förderbahn rechtwinklig abzweigenden Förderbahn umgelenkt wird. Dies geschieht durch den Einsatz einer bekannten Hub-Quereinheit die in eine Fördereinrichtung integriert ist.

Durch die in den Unteransprüchen aufgeführten Maßnahmen sind vorteilhafte Weiterbildungen und Verbesserungen der Anordnung nach dem Hauptanspruch möglich.

Besonders vorteilhaft ist die Weiterbildung dahingehend, daß das Sperrglied als Umlenkrolle an einem Schwenkhebel ausgebildet ist, wobei ein Um-oder Ablenken durch ein verschleiß- und druckfreies Abwälzen des Gegenstandes ermöglicht wird.

Die zweite Endstellung des Sperrglieds wird zweckmäßigerweise durch einen Gehäuseanschlag bewerkstelligt.

Die Vorrichtung ist besonders einfach aufgebaut, indem ein mit dem Schwenkhebel zusammenwirkender Schieber koaxial zu einer Dämpfungseinrichtung angeordnet ist. Dabei kann die Dämpfungseinrichtung im Gehäuse axial verstellt werden, um eine Wegvorgabe des Schwenkhebels vorzunehmen.

Vorteilhaft ist weiterhin, daß die beiden Endstellungen des Schwenkhebels durch eine mechanische Wegbegrenzung durch Gehäuseanschlag vorgenommen wird.

In vorteilhafter Weiterbildung der Erfindung ist weiterhin vorgesehen, daß der Schieber im Gehäuse als Steuereinheit für eine pneumatische Steuerung dient, die z. B. eine Endlagenabfrage vornehmen kann.

Zeichnung

Weitere vorteilhafte und zweckmäßige Einzelheiten der Erfindung sind in der Zeichnung dargestellt und in der nachfolgenden Beschreibung näher erläutert. Es zeigen

Fig. 1     einen Längsschnitt durch ein Ausführungsbeispiel in schematischer Darstellung,

Fig. 2     schematisch dargestellte Anwendungsbeispiele für die erfindungsgemäße Vorrichtung und

Fig. 3     eine Ausführungsform der Erfindung nach Fig. 1 mit zusätzlicher pneumatischer Endlagenabfrage.

Beschreibung der Ausführungsbeispiele

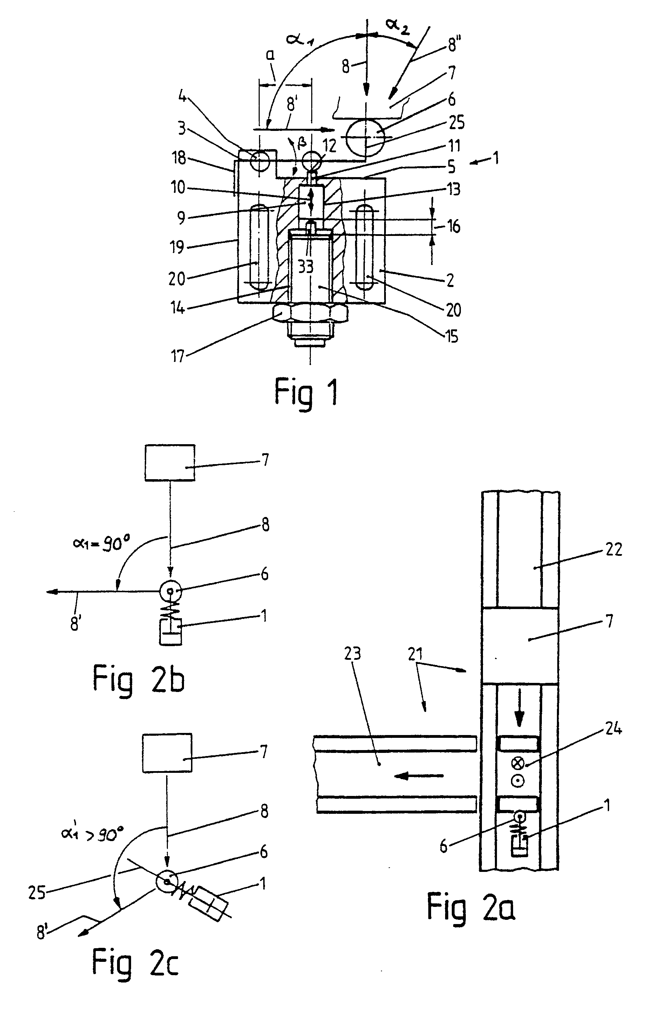

Der in der Fig. 1 dargestellte gedämpfte Anschlag 1 besteht aus einem Gehäuse 2, an welchem ein, um einen Winkel $\beta$ verschwenkbarer Schwenkhebel 3 in einem Lager 4 angelenkt ist. Der Schwenkhebel 3 liegt z. B. nahezu parallel zu einer in Fig. 1 oberen Gehäuseseite 5 die gleichzeitig als Anschlagfläche 5 für den Schwenkhebel 3 in seiner zweiten Endstellung dient. An seinem der Lagerung 4 gegenüberliegenden Ende des Schwenkhebels 3 befindet sich eine Umlenkrolle 6 die als Sperrglied 6 für den auftreffenden Gegenstand bzw. das Objekt 7 dient. Dieses Objekt kann ein Werkstück oder ein Werkstückträger sein. Die normale Auftreffrichtung ist mit Pfeil 8 gekennzeichnet.

Die Schwenkbewegung des schematisch dargestellten Schwenkhebels 3 um den Winkel $\beta$ wird auf einen, im Gehäuse 2 angeordneten Schieber 9 übertragen, der eine axiale Bewegung (Pfeil 10) durchführt. Hierfür weist der Schieber 9 an seinem oberen Ende einen aus dem Gehäuse herausragenden Anschlagstift 11 auf, der den Schwenkhebel 3 in einem Abstand "a", vom Drehpunkt 4 insbesondere etwa in seiner Mitte im Abstützpunkt 12 abstützt.

Koaxial zur Bohrung 13 für den Schieber 9 befindet sich im Gehäuse 2 eine weitere Bohrung 14, die die Dämpfungseinrichtung 15 aufnimmt. Hierbei handelt es sich um eine handelsübliche Kolben-Zylindereinheit (Verschiebkolben 33), die als hydraulischer Miniatur-Dämpfer mit entsprechender Dämpfungsrate ausgebildet ist. Dabei kann die Dämpfungseinrichtung 15 unterschiedlich tief in die Bohrung 14 eingeschraubt werden, um den maximalen Weg des Schiebers 9 und damit die Winkelverstellung $\beta$ des Schwenkhebels 3 zu bestimmen. Schraubt man die Dämpfungseinrichtung 15 weiter aus dem Gehäuse 2 heraus, so verkürzt sich der wirksame (maximale) Dämpfungsweg 16, so daß die gedämpfte Schwenkbewegung des Schwenkhebels 3 um einen entsprechenden Winkel verkürzt wird. Das Herausdrehen des Dämpfers 15 bewirkt, daß die Kolbenstange 33 des Dämpfers 15 den Schieber 9 erst später berührt. Der Ein- und Rückfederweg ist damit kleiner. Durch das Rein- und Herausdrehen der Dämpfungseinrichtung 15 kann prinzipiell der Dämpfungsweg variiert werden.

Die eingestellte Lage der Dämpfungseinrichtung 15 wird mit der Kontermutter 17 festgelegt.

Die Fig. 1 zeigt weiterhin einen abgekröpften Hebelarm 18 am lagerseitigen Ende des Schwenkhebels 3, der eine weitere Aufwärtsbewegung des Schwenkhebels durch Anlage an die seitliche Gehäuseseite 19 verhindert. Dies stellt eine Begrenzung für die Ausfederung des Schwenkhebels 3 dar. Weiterhin zeigt die Figur zwei Langlöcher 20 für die Befestigung des Anschlags an der Fördereinrichtung.

In Fig. 2a ist der erfindungsgemäße Anschlag 1 symbolisch in einer Fördereinrichtung 21 dargestellt, bestehend aus einem Längsförderband 22 und einem rechtwinklig hierzu abzweigenden Querförderband 23. Um die Umsetzung eines auf dem Längsförderband 22 ankommenden Werkstückträgers 7 zum Querförderband 23 vornehmen zu können, ist eine bekannte Hub-Quereinheit 24 vorgesehen, auf die der Werkstückträger 7 aufläuft und vom Anschlag 1 abgebremst wird. Dieser Abbremsvorgang geschieht aufgrund der Vorrichtung nach Fig. 1 gedämpft, da die Schwenkbewegung des Schwenkhebels 3 beim Auftreffen des Werkstückträgers 7 gegen das als Umlenkrolle ausgebildete Sperrglied 6 auf den Schieber 9 und von dort auf den Kolben 33 der Dämpfungseinrichtung 15 übertragen wird. Der Werkstückträger 7 wird demnach in seiner linearen Längsbewegung zunächst abgebremst. Die Hub-Quereinheit 24 hebt den Werkstückträger vom Transportband 22 ab und fördert ihn auf das Querförderband 23. Dabei wälzt der Werkstückträger 7 an der Umlenkrolle 6 ruckfrei ab. Die Reibungskräfte auf der Anlauffläche des Werkstückträgers sind somit minimal.

In Fig. 2b ist dieser Vorgang der rechtwinkligen Umlenkung nochmals schematisch durch die Pfeile 8, 8' dargestellt. In diesem Fall beträgt der Ablenkwinkel $\alpha_1 = 90°$.

Gemäß der Darstellung in Fig. 1 sowie Fig. 2c kann der Umlenkwinkel variieren. In Fig. 1 ist hierfür mit 8" ein Auftreffwinkel des auftreffenden Objekts 7 gezeigt, der um den Auftreffwinkel $\alpha_2$ gegenüber der Auftreffrichtung 8 verschoben ist. Gleichermaßen kann gemäß der Darstellung in Fig. 2c der Umlenkwinkel $\alpha_1'$ größer als 90° sein. In diesem Fall wird der Anschlag 1 mit seiner durch die Umlenkrolle 6 führende Längsachse 25 in die Winkelhalbierende von $\alpha_1'$ gelegt. Im übrigen ist die Lagerung der Umlenkrolle 6, d. h. die Kraftflußrichtung am Schwenkhebel 3 entscheidend für die Anstellrichtung der Umlenkrolle.

Selbstverständlich kann der jeweilige Werkstückträger auch die jeweilig umgekehrten Richtungen durchfahren.

In Fig. 3 ist die erfindungsgemäße Vorrichtung mit einem pneumatischen Steuerausgang ausgeführt. Hierfür weist das Gehäuse 2 zwei sich gegenüberliegende, in die Führungsbohrung 13 des Schiebers 9 einmündende Steuerbohrungen 26, 27 auf, von denen die Bohrung 27 ins Freie führt. Die Bohrung 26 ist mit einer Endlagenabfrageschaltung versehen, wobei eine Steuerleitung 28 mittels einer Pumpe 29 mit Druckmedium beaufschlagbar ist. Das Druckmedium wird über eine verstellbare Drossel 30 mit Bypass entweder der Steuerleitung 28 und damit den Bohrungen 26, 27 oder - bei geschlossenem Durchgang der Bohrungen 26, 27 - einem 5/2-Wege-Verstärkerventil 31 zugeführt. Dabei bildet die untere Begrenzung des verstellbaren Schiebers 9 eine Steuerkante 32, die den Durchgang der Bohrungen 26, 27 steuert.

Die Funktionsweise der Schaltung nach Fig. 3 wird im Zusammenhang mit dem Anschlag 1 wie folgt beschrieben:

In der Ausgangsposition befindet sich der Anschlag 1 in der in Fig. 1 oder 3 dargestellten Lage (erste Stellung), d. h. der Schwenkhebel übt keine Kraft auf den Anschlagstift 11 des Schiebers 9 aus. Sobald der Werkstückträger 7 gegen das als Umlenkrolle 6 ausgebildete Sperrglied 6 auftrifft, wird der Schwenkhebel 3 in Fig. 1 und 3 nach unten gedrückt, bis er gegen die obere Anschlagfläche 5 des Gehäuses 2 auftrifft (zweite Endstellung). In diesem Fall schiebt der Schwenkhebel 3 in seinem mittleren Bereich den Anschlagstift 11 des Schiebers 9 nach unten und dieser bewegt sich ebenfalls gegen den Kolben 33 der Dämpfungseinrichtung 15. In der ersten Ausgangsstellung liegt die Steuerkante 32 oberhalb der Bohrungen 26, 27, so daß die aus der Pumpe 29 über die Drossel 30 geführte Luft über die Steuerleitung 28 und die Bohrungen 26, 27 ins Freie gelangen kann. Das 5/2-Wege-Ventil 31 ist in diesem Fall über die weitere Steuerleitung 34 nicht mit Druck beaufschlagt, so daß der Anschluß X über die Steuerleitung 35 mit Druckluft belegt ist. Dieser Anschluß X gibt das Signal, daß noch kein Werkstückträger gegen den Anschlag gefahren ist.

Sobald die Steuerkante 32 des Schiebers 9 die Durchgangsbohrung 26, 27 aufgrund der Abwärtsbewegung des Schiebers 9 verschließt, baut sich in der Steuerleitung 34 ein Druck auf, der das 5/2-Wege-Ventil umschaltet, so daß der Ausgang Y mit Druckluft aus der Steuerleitung 35 belegt ist, wodurch das Vorhandensein des Werkstückträgers signalisiert wird. Bei diesem Vorgang wird der Kolben 33 der Dämpfungseinrichtung 15 in das Gehäuse der Dämpfungseinrichtung eingedrückt, wodurch die Bewegung des Schiebers 9 und damit der Umlenkrolle 6 gedämpft wird.

In der Fig. 3 ist die zweite Endstellung der Umlenkrolle 6 mit Bezugszeichen 6' angedeutet. Eine weitere Steuerungsmöglichkeit kann auch durch Einstiche am Schieber 9 selbst vorgenommen werden, wobei die Leitungen 26, 27 mit solchen Einstichen zusammenwirken müssen.

Bei entsprechender Ausführung des Gehäuses 2 (z. B. zusätzliche Abdichtungen) kann die Dämpfungseinrichtung auch selbst als 2/2 oder 3/2 Ventil verwendet werden, wodurch zugleich ein Signalgeber geschaffen wird. Die Luftversorgung wird hierbei insgesamt durch die Vorrichtung geführt, wobei der Durchfluß durch den Schieber beeinflußt wird und eine Steuerung ohne zusätzlichen pneumatischen Verstärkerkreis (Bauteil 31) möglich ist.

Die Erfindung ist nicht auf das dargestellte und beschriebene Ausführungsbeispiel beschränkt. Sie umfaßt auch vielmehr alle fachmännischen Weiterbildungen und Abwandlungen ohne eigenen erfinderischen Gehalt.

**Ansprüche**

1. Vorrichtung zum gedämpften Anhalten und Umlenken von auf einer Förderbahn bewegten Objekten wie Werkstücke oder Werkstückträger mit einem, am Ende eines Schwenkhebels angeordneten Sperrglied, das zwischen einer ersten Anschlagstellung für das Objekt und einer zweiten, durch eine Anschlagfläche gebildeten Endstellung verschiebbar gelagert ist und mit einer Dämpfungseinrichtung, welche die vom Objekt verursachte Schiebebewegung des Sperrgliedes von der ersten Anschlagstellung bis zur zweiten Endstellung dämpft, dadurch gekennzeichnet, daß der Schwenkhebel (3) für das Sperrglied (6) seitlich an einem Gehäuse (2) angelenkt ist und daß die Schwenkbewegung ($\beta$) des Schwenkhebels (3) auf einen, im Gehäuse (2) axial verschiebbaren Schieber (9) übertragbar ist, dessen axiale Bewegung (Pfeil 10) durch die hiermit zusammenwirkende Dämpfungseinrichtung (15) gedämpft ist.

2. Vorrichtung nach Anspruch 1, dadurch gekennzeichnet, daß das Sperrglied (6) als Umlenkrolle (6) zur Umlenkung oder Ablenkung des auftreffenden Objekts ausgebildet ist.

3. Vorrichtung nach Anspruch 1, dadurch gekennzeichnet, daß für die zweite Endstellung des Sperrglieds (6) eine Anschlagfläche (5) für den Schwenkhebel (3) am Gehäuse (2) vorgesehen ist.

4. Vorrichtung nach Anspruch 1, dadurch gekennzeichnet, daß der Schieber (9) und die Dämpfungseinrichtung (15) in koaxial hintereinander angeordneten Gehäusebohrungen (13, 14) angeordnet sind, wobei der Schieber (9) einen aus dem Gehäuse (2) herausragenden, mit dem Schwenkhebel (3) zusammenwirkenden Anschlagstift (11) aufweist.

5. Vorrichtung nach Anspruch 1 oder 4, dadurch gekennzeichnet, daß die axiale Lage der Dämpfungseinrichtung (15) im Gehäuse (2) durch axiales Verschieben und damit der Verstellweg des Schiebers (9) und des Schwenkhebels (3) einstellbar sind.

6. Vorrichtung nach einem oder mehreren der vorhergehenden Ansprüche, dadurch gekennzeichnet, daß die erste Anschlagstellung des Sperrgliedes (6) durch eine Wegbegrenzung der Schwenkbewegung des Schwenkhebels (3) mittels eines abgekröpften Hebelarms (18) fixiert ist, der sich an einer Gehäuseseite (19) abstützt.

7. Vorrichtung nach einem oder mehreren der vorhergehenden Ansprüche, dadurch gekennzeichnet, daß das Gehäuse (2) mit in die Führungsbohrung (13) für den Schieber (9) einmündenden Steuerbohrungen (26, 27) versehen ist, die im Zuge einer Steuerleitung (28, 34) eines Signalgebers (31) liegen und deren wirksamer Durchgangsquerschnitt im Gehäuse (2) vom Schieber (9) stellungsabhängig beeinflußbar ist.

8. Vorrichtung nach einem oder mehreren der vorhergehenden Ansprüche, dadurch gekennzeichnet, daß durch eine entsprechende Wahl der Dämpfungseinrichtung (15) mit unterschiedlicher Dämpfungsrate unterschiedliche Verzögerungen abhängig vom Gewicht des Werkstückträgers (7) erzielbar sind.

9. Vorrichtung nach Anspruch 7, dadurch gekennzeichnet, daß die Dämpfungsvorrichtung mittels entsprechenden Steuerbohrungen auch selbst als Signalgeber (z. B. 2/2 oder 3/2-Wegeventil) verwendbar ist.

Fig 1

$\alpha_1 = 90°$

Fig 2b

$\alpha_1' > 90°$

Fig 2c

Fig 2a

Fig 3

Europäisches
Patentamt

**EUROPÄISCHER
RECHERCHENBERICHT**

Nummer der Anmeldung

**EP 90 12 1929**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN vol. 10, no. 291 (M-522)(2347) 03 Oktober 1986, & JP-A-61 106326 (FUROOMU) 24 Mai 1986, * das ganze Dokument * | 1,2 | B 65 G 47/88 B 23 Q 7/14 |
| A | DD-A-6 052 1 (W. SCHMOOK) * das ganze Dokument * | 1,2 | |
| D,A | DE-C-3 629 914 (H. WÖRNER) * Anspruch 1; Figuren 1, 2 * | 1 | |
| A | DE-A-3 229 191 (ROBERT BOSCH) * Ansprüche 1-7; Figuren 1-3 * | 1,5 | |

| RECHERCHIERTE SACHGEBIETE (Int. Cl.5) |
|---|
| B 23 Q B 65 G |

Der vorliegende Recherchenbericht wurde für alle Patentansprüche erstellt

| Recherchenort | Abschlußdatum der Recherche | Prüfer |
|---|---|---|
| Berlin | 09 April 91 | SIMON J J P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument